# EUROPÄISCHE PATENTSCHRIFT

(11) **EP 2 097 295 B1**
(45) Veröffentlichungstag und Bekanntmachung des Hinweises auf die Patenterteilung: **15.09.2010**
(21) Anmeldenummer: 07822530.7
(22) Anmeldetag: 13.11.2007
(51) Int. Cl.: B60R 11/02, G09G 3/20

(54) **LENKRADBAUGRUPPE FÜR EIN KRAFTFAHRZEUG UND VERFAHREN ZUM BEDIENEN EINER PORTABLEN FUNKTIONSKOMPONENTE**
STEERING WHEEL ASSEMBLY FOR A MOTOR VEHICLE AND METHOD FOR OPERATING A PORTABLE FUNCTIONAL COMPONENT
DISPOSITIF D'AFFICHAGE AVEC SUPPORT DE STOCKAGE ET SYSTEME D'ECRITURE DE DONNEES

(30) Priorität: 05.12.2006 DE 102006058362
(43) Veröffentlichungstag der Anmeldung: 09.09.2009
(73) Patentinhaber: Takata-Petri AG, 63743 Aschaffenburg (DE)
(72) Erfinder: BENDER, Jürgen, 60529 Frankfurt (DE); BISCHOFF, Michael, 63768 Rottenberg (DE); GERMUTH-LÖFFLER, Michael, 63741 Aschaffenburg (DE)
(74) Vertreter: Baumgärtel, Gunnar
(86) Internationale Anmeldenummer: PCT/EP2007/062256
(87) Internationale Veröffentlichungsnummer: WO 2008/068131

(56) Entgegenhaltungen:
- EP-A- 1 184 225
- EP-A- 1 375 972
- EP-A- 1 502 835
- DE-A1- 10 004 965
- DE-U1- 29 702 001
- FR-A- 2 751 287
- GB-A- 2 424 854
- US-A1- 2002 068 605

## Beschreibung

Die Erfindung betrifft eine Lenkradbaugruppe für ein Kraftfahrzeug gemäß dem Oberbegriff des Anspruchs 1 sowie ein Verfahren zum Bedienen einer portablen Funktionskomponente in einem Kraftfahrzeug.

Bekannte Lenkradbaugruppen umfassen ein Lenkrad zum Steuern eines Kraftfahrzeuges und zumindest ein am Lenkrad angeordnetes Betätigungselement, das zum Betätigen zumindest einer im Kraftfahrzeug installierten ersten Funktionskomponente des Kraftfahrzeuges eingerichtet und vorgesehen ist. Unter einer in einem Kraftfahrzeug installierten Funktionskomponente wird dabei eine Funktionskomponente wie z.B. ein Autoradio oder ein Navigationssystem verstanden, die zum dauerhaften Betrieb und Verbleib in einem Kraftfahrzeug eingerichtet und vorgesehen ist. Des Weiteren weisen solche Lenkradbaugruppen eine mit dem Betätigungselement gekoppelte Steuerelektronik zum Steuern des Betätigungselementes auf, die in Abhängigkeit von einer Betätigung des Betätigungselementes Ausgangssignale zum Einwirken auf die erste Funktionskomponente erzeugt. Z.B. ist ein Betätigungselement der Lenkradbaugruppe als Kippschalter (Joystick), Taster oder Drehregler bzw. Drehauswahlregler ausgebildet und in das Lenkrad integriert.

Aus der EP 1 502 835 A ist eine derartige Lenkradbaugruppe bekannt, mit einem Lenkrad und zwei zueinander beabstandeten Steuerungsschnittstellen auf der Oberfläche des Lenkrades sowie einer visuellen Anzeige im Fahrzeug, wobei mittels der ersten Steuerungsschnittstelle auf ein Fahrzeugsystem zugegriffen werden kann und mittels der zweiten Steuerungsschnittstelle der Zustand des Zugriffs auf das Fahrzeugsystem durch die erste Steuerungsschnittstelle veränderbar ist.

Der Erfindung liegt die Problem zugrunde, eine Lenkradbaugruppe zu schaffen, deren Flexibilität im Hinblick auf die Bedienung von Funktionskomponenten verbessert ist.

Dieses Problem wird durch eine Lenkradbaugruppe mit den Merkmalen des Anspruchs 1 gelöst.

Danach ist vorgesehen, dass die Steuerelektronik dazu eingerichtet und vorgesehen ist, das Betätigungselement einer portablen zweiten Funktionskomponente zuzuordnen, die in einer Wirkumgebung der Steuerelektronik positioniert ist, so dass die portable zweite Funktionskomponente mittels des Betätigungselementes betätigbar ist.

Durch die erfindungsgemäße Lösung sind portable Funktionskomponenten, insbesondere in Form von satellitengesteuerten Navigationssystemen (z.B. GPS) über das Lenkrad auf einfache Weise bedienbar, wobei keine Montage von zusätzlichen Komponenten am Lenkrad erforderlich ist.

Vorzugsweise werden die zweiten Funktionskomponenten an Stelle der ersten Funktionskomponenten mit dem Betätigungselement betätigt, d.h., es erfolgt eine Umschaltung des Betätigungselementes von der ersten Funktionskomponente zur zweiten (mobilen) Funktionskomponente.

Die portablen zweiten Funktionskomponenten (tragbares MP3-Abspielgerät, PDA etc.) sind im Gegensatz zu den ersten Funktionskomponenten nicht zur festen Installation in ein Kraftfahrzeug vorgesehen und unterscheiden sich darin von den ersten Funktionskomponenten. Insbesondere sind die zweiten, mobilen Funktionskomponenten nicht über eine Leitungsverbindung mit einer fahrzeugseitigen Elektronik verbunden.

Bevorzugt ist die Steuerelektronik, ebenso wie das mindestens eine Betätigungselement, im Lenkrad angeordnet. Hierdurch weist die erfindungsgemäße Lenkradbaugruppe ein vorteilhaft hohes Integrationsmaß auf. Da die Steuerelektronik vorzugsweise dazu ausgebildet ist, über eine zum leitungslosen Austausch von Daten ausgebildete Signalübertragungsverbindung Daten mit der portablen zweiten Funktionskomponente auszutauschen, ist keine im Kraftfahrzeug vorzusehene Leitungsverbindung zwischen der portablen zweiten Funktionskomponente und eine fahrzeugseitigen Elektronik erforderlich.

Auf diese Weise ermöglicht die erfindungsgemäße Lenkradbaugruppe eine flexible Nutzung von tragbaren Geräten (Funktionskomponenten) in Kraftfahrzeugen aller Art, auch Land- und Baumaschinen.

Zum leitungslosen Übertragen von Daten zur zweiten Funktionskomponente weist die Steuerelektronik eine Sendeeinheit auf, der auf Seite der tragbaren, zweiten Funktionskomponente eine Empfangseinheit zugeordnet ist. Weiterhin weist die Steuerelektronik zum leitungslosen Empfangen von Daten eine Empfangseinheit auf, der auf Seiten der zweiten Funktionskomponente eine Sendeeinheit zugeordnet ist. Die vorgenannten Sende- bzw. Empfangseinheiten bilden jeweils einen Element der Signalübertragungsverbindung, bei der es sich insbesondere um eine Funk-, kapazitive, induktive, IR- oder Ultraschallverbindung handelt.

Die räumliche Ausdehnung der Wirkumgebung der Steuerelektronik wird somit durch die Reichweite der Signalübertragungsverbindung definiert, wobei die Reichweite vorzugsweise auf einen Innenraum eines Kraftfahrzeuges, in dem die Lenkradbaugruppe anzuordnen ist, beschränkt ist.

Zum Bedienen der ersten bzw. zweiten Funktionskomponente weist die Steuerelektronik bei einer Betätigung des Betätigungselementes, die das Betätigungselement in eine bestimmte Einstellungen (von mehreren möglichen Einstellungen) verstellt, der jeweils aktuell eingestellten Einstellung des Betätigungselementes ein Ausgangssignal zum Einwirken auf eine Funktionskomponente eindeutig zu. Diese Ausgangssignale werden - für den Fall, dass keine zweite Funktionskomponente in der Wirkumgebung der Steuereinheit angeordnet ist bzw. eine Steuerung der zweien Funktionseinheit mittels der Betätigungseinheit nicht erwünscht ist - durch die Steuerelektronik auf die erste Funktionskomponente übertragen und bewirken dort eine Veränderung einer Einstellung bzw. eines Betriebszustandes der ersten Funktionskomponente. Insbesondere kann die erste Funktionskomponente hierdurch umfassend gesteuert werden. Dies schließt u. a. ein Aktivieren, Deaktivieren und Regeln der einzelnen Funktionen der ersten Funktionskomponente ein. Bei einer ersten Funktionskomponente in Form eines Autoradios kann beispielsweise mittels der Betätigungseinheit die Lautstärke eingestellt werden, die Frequenz des zu empfangenden Senders etc. Bei einer ersten Funktionskomponente in Form eines fest installierten Navigationssystems (z.B. GPS) können mittels des Betätigungselementes insbesondere Fahrziele und Fahrrouten eingegeben bzw. abgefragt werden. Eine Übermittlung der Ausgangsignale an die erste Funktionskomponente kann über eine Leitungsverbindung erfolgen oder über eine kabellose Verbindung.

Bevorzugt ist die Steuerelektronik dazu ausgebildet, auf eine durch die zweite Funktionskomponente über die Signalübertragungsverbindung zur Steuerelektronik übertragene erste Kennung hin eine zweite Kennung über die Signalübertragungsverbindung an die zweite Funktionskomponente zu senden, in der zumindest die Anzahl der zur Bedienung der zweiten Funktionskomponente zur Verfügung stehenden Betätigungselemente kodiert ist.

Des Weiteren ist die Steuerelektronik bevorzugt dazu eingerichtet und vorgesehen, auf ein entsprechendes durch den Benutzer veranlasstes (positives) Antwortsignal der zweiten Funktionskomponente hin, das über die Signalübertragungsverbindung von der zweiten tragbaren Funktionskomponente zur Steuerelektronik übermittelt wird, die Ausgangssignale der zweiten Funktionskomponente zuzuordnen, so dass die portable zweite Funktionskomponente an Stelle der im Kraftfahrzeug fest installierten ersten Funktionskomponente mittels des Betätigungselementes wie vorstehend beschrieben betätigbar ist.

Zum Zwecke der Zuordnung der Ausgangsignale zur zweiten Funktionskomponente ist die Steuerelektronik insbesondere dazu ausgebildet eine zweite Kennung in Form eines Signals an die zweite Funktionskomponente zu übermitteln, in der - neben der Anzahl der zur Verfügung stehenden Betätigungselemente - auch die jeweils möglichen Einstellungen eines Betätigungselementes und die den Einstellungen und den Betätigungselementen zugeordneten Ausgangssignale kodiert sind, so dass die die Ausgangssignale empfangende erste Funktionseinheit in die Lage versetzt ist, die Ausgangsignale zur Betätigung ihrer einzelnen Funktionen, d.h., zur Veränderung ihres Betriebszustandes, entsprechend umzusetzen.

Eine Übermittlung der der zweiten Funktionskomponente zugeordneten Ausgangssignale von der Steuerelektronik zur zweiten Funktionskomponente erfolgt über die Sendeeinheit der Steuerelektronik, d.h., über die Signalübertragungsverbindung.

Die aus dem Betätigungselement und der Steuerelektronik gebildete, im Lenkrad angeordnete Betätigungseinheit realisiert also die Funktion einer Kommunikation mit einer mobilen (zweiten) Funktionskomponente über eine kabellosen Verbindung. Erst wenn eine portable, zweite Funktionskomponente in die Nähe, d.h., in die Wirkumgebung der im Lenkrad befindlichen Steuerelektronik verbracht wird, wird geprüft, ob eine Umschaltung des Betätigungselementes von der ersten auf die zweite Funktionskomponente vorgenommen werden soll. Die Kommunikation zwischen der portablen zweiten Funktionskomponente und der Steuerelektronik findet unabhängig von der Fahrzeugelektronik statt. D.h., das Bedienen der zweiten Funktionskomponente mittels des Betätigungselementes stellt eine Zusatzfunktionalität der Betätigungseinheit bzw. Lenkradbaugruppe dar, die unabhängig von einer Kraftfahrzeugelektronik und - kommunikationsstruktur realisierbar ist.

In einer Variante der Erfindung ist eine im Wirkbereich der Steuerelektronik anzuordnende Adaptereinheit vorgesehen, die über die Signalübertragungsverbindung mit der Steuerelektronik verbunden ist. Diese Adaptereinheit ist dazu eingerichtet und vorgesehen, mit der zweiten, mobilen Funktionskomponente verbunden zu sein, so dass die Adaptereinheit Daten von der zweiten Funktionskomponente empfangen und zur zweiten Funktionskomponente übertragen kann, d.h., die Adaptereinheit bildet sowohl eine Schnittstelle zur Steuerelektronik als auch zur tragbaren, zweiten Funktionskomponente. Der Vorteil dieser Variante der Erfindung besteht insbesondere darin, dass auch bereits existierende zweite Funktionskomponenten, die nicht zur Kommunikation über die Signalübertragungsverbindung mit der Steuerelektronik ausgelegt sind, an die Steuerelektronik angebunden werden können, so dass sie mittels des mindestens einen Betätigungselementes bedienbar sind. Hierbei wird insbesondere eine vorhandene Schnittstelle der zweiten Funktionskomponente zur Verbindung mit der Adaptereinheit verwendet.

Die Adaptereinheit selbst ist nun dazu ausgebildet, ein das Antwortsignal der zweiten Funktionskomponente, mit dem der Benutzer die Umschaltung des mindestens einen Betätigungselementes autorisiert, derart umzusetzen und an die Steuerelektronik kabellos zu übertragen, dass die Steuerelektronik auf das umgesetzte Antwortsignal hin die Ausgangssignale der zweiten Funktionskomponente zuordnet. Zum Übertragen des (ggf. umgewandelten) Signals der zweiten Funktionskomponente auf die Steuereinheit verfügt die Adaptereinheit über eine Sendeeinheit, die ein Element der Signalübertragungsverbindung zwischen der Steuereinheit und der Adaptereinheit darstellt.

Die der zweiten Funktionskomponente durch die Steuerelektronik infolge des Antwortsignals der zweiten Funktionskomponente zugeordneten Ausgangsignale werden durch die Steuerelektronik über die Signalübertragungsverbindung zur Adaptereinheit übertragen, die vorzugsweise dazu ausgebildet ist, die Ausgangsignale derart umzusetzen und an die zweite Funktionskomponente zu übermitteln, dass die zweite Funktionskomponente mittels des Betätigungselementes betätigbar ist.

Die durch die Steuerelektronik vorgenommene Zuordnung schließt dabei wie oben beschrieben ein, dass die Steuerelektronik dazu ausgebildet ist, eine zweite Kennung in Form eines Signals an die Adaptereinheit zu übermitteln, in der - neben der Anzahl der zur Verfügung stehenden Betätigungselemente - die jeweils möglichen Einstellungen eines Betätigungselementes und die den Einstellungen zugeordneten Ausgangssignale eindeutig kodiert sind, so dass die die Ausgangssignale empfangende Adaptereinheit in die Lage versetzt ist, die Ausgangsignale zur Betätigung der einzelnen Funktionen der zweiten Funktionskomponente entsprechend umzusetzen und an die zweite Funktionskomponente zu übermitteln.

In einer Ausführungsform der Erfindung ist an dem mindestens einen Betätigungselement ein Anzeigeelement zum Anzeigen von Informationen vorgesehen, bei dem es sich insbesondere um eine optische Anzeige (Displays, LED etc) handelt. Damit für einen Benutzer ersichtlich ist, welche Funktionen bzw. Parameter einer Funktionskomponente mit dem Betätigungselement einstellbar (veränderbar) sind, ist die Steuerelektronik dazu eingerichtet und vorgesehen, einen mittels des Betätigungselementes einstellbaren Betriebszustand der ersten oder zweiten Funktionskomponente (z.B. die Lautstärke einer Funktionskomponente in Form eines Audiogerätes) über das Anzeigelement anzuzeigen, insbesondere als ein Symbol in Form eines Piktogramms. Alternativ können kurze Begriffe (Wörter) in einer vorbestimmbaren Sprache angezeigt werden, die die jeweilige den jeweiligen, einzustellenden Parameter (Betriebszustand) der betreffenden Funktionskomponente eindeutig beschreiben. Eine Sprachansage ist ebenfalls denkbar.

In einer weiteren Ausführungsform der Erfindung ist eine eigens auf die Lenkradbaugruppe abgestimmte (portable) zweite Funktionskomponente vorgesehen, die in der Wirkumgebung der Steuereinheit im Kraftfahrzeug anzuordnen ist und die insbesondere als eine der folgenden Funktionskomponenten ausgebildet ist: ein portables Navigationsgerät, insbesondere satellitengesteuert, zum Anzeigen einer Fahrtroute, ein portabler PDA (Personal Digital Assistant), ein Mobiltelefon, ein portables Audiogerät, insbesondere MP3-Player oder ein portabler PC (Notebook).

Diese zweite Funktionskomponente ist bevorzugt dazu eingerichtet und vorgesehen, ihren mittels des Anzeigeelementes anzuzeigenden Betriebszustand über die Signalübertragungsverbindung an die Steuereinheit zu übermitteln. Zum Übertragen der den jeweiligen, anzuzeigenden Betriebszustand kennzeichnenden Daten weist das zweite Funktionselement eine Sendeinheit auf, die ein Bestandteil der Signalübertragungsverbindung zwischen der zweiten Funktionskomponente und der Steuereinheit darstellt.

Die zumindest eine fest installierte erste Funktionskomponente ist bevorzugt als eine der folgenden Funktionskomponenten ausgebildet: ein Autoradio, ein Telefon, ein Bordcomputer, oder ein Navigationsgerät (z.B. GPS).

In einer Variante der Erfindung ist eine Mehrzahl an Betätigungselementen in das Lenkrad integriert, die zum Betätigen zumindest einer ersten, im Kraftfahrzeug installierten Funktionskomponenten dienen. In diesem Fall ist die Steuerelektronik dazu ausgebildet, eine Gruppe aus der Gesamtheit der Betätigungselemente einer portablen zweiten Funktionskomponente zuzuordnen, die in einer Wirkumgebung der Steuerelektronik lokalisiert ist, so dass die portable zweite Funktionskomponente an Stelle zumindest einer ersten Funktionskomponente mittels der Gruppe der Betätigungselemente betätigbar ist.

Des Weiteren wird das erfindungsgemäße Problem durch ein Verfahren zum Bedienen einer portablen Funktionskomponente mit einer erfindungsgemäßen Lenkradbaugruppe gelöst. Das erfindungsgemäße Verfahren umfasst die folgenden Schritte:
- Bereitstellen einer Lenkradbaugruppe mit zumindest einem am Lenkrad angeordneten Betätigungselement, das zum Betätigen zumindest einer im Kraftfahrzeug installierten ersten Funktionskomponente des Kraftfahrzeuges eingerichtet und vorgesehen ist und eine mit dem Betätigungselement zusammenwirkende Steuerelektronik zum Steuern des Betätigungselementes aufweist,
- Empfangen einer ersten Kennung der portablen zweiten Funktionskomponente durch die Steuerelektronik, insbesondere über eine Signalübertragungsverbindung, die zum kabellosen Übertragen von Signalen ausgebildet ist,
- daraufhin Zurücksenden einer zweiten Kennung an das portable Funktionselement durch die Steuerelektronik, insbesondere über die Signalübertragungsverbindung, wobei in der Kennung zumindest die Anzahl der am Lenkrad zur Bedienung der zweiten Funktionskomponente zur Verfügung stehenden Betätigungselemente kodiert ist,
- Auswahl zumindest eines Betätigungselementes aus der Anzahl der zur Verfügung stehenden Betätigungselemente des Lenkrades mittels der portablen, zweiten Funktionskomponente.

Das erfindungsgemäße Verfahren ermöglicht somit mit Vorteil die flexible Nutzung zusätzlicher, portabler Funktionskomponenten auf einfache Art und Weise, ohne dass nachträglich Installationsarbeiten am Kraftfahrzeug durchgeführt werden müssen.

Bevorzugt wird die erste Kennung auf Veranlassung eines Benutzers (z.B. Fahrer) durch die zweite Funktionskomponente in Form eines Signals generiert und kabellos zur Steuerelektronik übermittelt.

Auf die zweite Kennung der Steuerelektronik hin wird bevorzugt mittels der zweiten Funktionskomponente auf Veranlassung des Benutzers ein Antwortsignal erzeugt, in dem der Wille des Benutzers, das mindestens eine Betätigungselement auf die zweite Funktionskomponente umzuschalten (positive Antwort) bzw. nicht umzuschalten (negative Antwort) kodiert ist. Diese Antwortsignal wird kabellos auf die Steuerelektronik übertragen, um das zumindest eine Betätigungselement der zweiten Funktionskomponente zuzuordnen. Bei einer Mehrzahl zu Verfügung stehender Betätigungselemente ist insbesondere in dem Antwortsignal kodiert, welche Betätigungselemente zur Regelung der zweiten Funktionskomponente herangezogen werden sollen.

Des Weiteren ist in einer Variante des Verfahrens vorgesehen, dass die Signalübertragungsverbindung durch Eingabe eines Freischaltcodes frei geschaltet wird. Vorzugsweise erfolgt die Eingabe des Freischaltcodes mittels des mindestens einen Betätigungselementes am Lenkrad oder an der zweiten Funktionskomponente. Eine Anzeige der Eingabe, d.h., des Freischaltcodes, erfolgt über ein Anzeigelement eines Betätigungselementes oder der zweiten Funktionskomponente (insbesondere mobiles Navigationsgerät).

Es besteht ferner die Möglichkeit über den Freischaltvorgang Lizenz- oder Installationskosten für den Betrieb des portablen zweiten Funktionselementes im Kraftfahrzeug abzurechnen.

Mittels der Steuerelektronik wird den unterschiedlichen Einstellungen des Betätigungselementes, in die das Betätigungselement manuell verstellbar ist, jeweils ein Ausgangssignal zum Einwirken auf die erste oder zweite Funktionskomponente zugeordnet. Die Zuordnung der unterschiedlichen Einstellungen zu den Ausgangsignalen sowie die insgesamt möglichen Einstellungen eines Betätigungselementes werden vorzugsweise ebenfalls in der Kennung kodiert, die die Steuereinheit an die zweite, tragbare Funktionskomponente übermittelt, so dass die zweite Funktionskomponente ein einfaches und effizientes Zuordnen der Ausgangsignale zu den einzelnen Betriebszuständen der zweiten Funktionskomponente vornehmen kann.

Das erfindungsgemäße Verfahren sieht weiterhin vor, dass die Steuerelektronik die Ausgangsignale zum Betätigen der erster Funktionskomponente so lange der ersten, fest im Kraftfahrzeug installierten Funktionskomponente zuordnet, bis das oben beschriebene (positive) Antwortsignal der zweiten Funktionskomponente von der Steuerelektronik empfangen wird. Nach dem Empfang einer positiven Antwort sendet die Steuerelektronik die Ausgangssignale kabellos an die zweite Funktionskomponente, so dass die zweite Funktionskomponente mittels des Betätigungselementes betätigbar ist.

Zur besseren Übersichtlichkeit sieht eine Variante des erfindungsgemäßen Verfahrens vor, dass mittels zumindest eines an dem mindestens einen Betätigungselement vorgesehenen Anzeigeelementes ein mittels des Betätigungselementes einzustellender Betriebsparameter der zweite Funktionskomponente als ein Symbol angezeigt wird. Dies geschieht allerdings nur für den Fall, dass das mindestens eine Betätigungselement der zweiten Funktionskomponente zugeordnet ist.

Das anzuzeigende Symbol wird dabei durch die zweiten Funktionskomponente bereitgestellt und von dieser zur mit dem Anzeigeelement verbundenen Steuerelektronik kabellos übertragen. Anstelle einer optischen Anzeige eines Symbols ist auch eine Sprachansage möglich, die beim Betätigen des Betätigungselementes den veränderten Betriebszustand des zweiten Funktionselementes bezeichnet.

Die der zweiten Funktionskomponente zugeordneten Ausgangsignale werden erneut der ersten Funktionskomponente zugeordnet, so dass die erste Funktionskomponente mittels des mindestens einen Betätigungselementes bedienbar ist, wenn die zweite, portable Funktionskomponente aus der Wirkumgebung, die durch die Reichweite einer Signalübertragungsverbindung zwischen der Steuerelektronik und der zweiten Funktionskomponente definiert ist, entfernt wird. Des Weiteren werden die Ausgangssignale erneut der ersten, fest installierten Funktionskomponente zugeordnet, wenn mittels der zweiten Funktionskomponente ein entsprechendes Abbruchsignals auf Veranlassung eines Benutzers zur Steuerelektronik übertragen wird.

Bevorzugt werden bei einer ersten Funktionskomponente, die zur Ausgabe von akustischen Signalen eingerichtet und vorgesehen ist, akustische Signale der zweiten Funktionskomponente über die erste Funktionskomponente wiedergegeben, wenn das Betätigungselement der zweiten Funktionskomponente zugeordnet ist.

Ebenso wird vorzugsweise bei einer Wiedergabe eines akustischen Signals durch die zweite Funktionskomponente eine akustische Anzeige der ersten Funktionskomponente stumm geschaltet, wenn das mindestens eine Betätigungselement der zweiten Funktionskomponente zugeordnet ist.

Weitere Merkmale und Vorteile der Erfindung werden bei der nachfolgenden Beschreibung von Ausführungsbeispielen anhand der Figuren deutlich werden.

Es zeigen:
- Figur 1:: eine schematische Ansicht einer Lenkradbaugruppe, mit einem Lenkrad, und einem am Lenkrad angeordneten Betätigungselement, wobei das Betätigungselement sowohl zum Einstellen einer ersten, fest im Kraftfahrzeug zu installierenden Funktionskomponente eingerichtet und vorgesehen ist als auch zum Bedienen einer zweiten, portablen Funktionskomponente an Stelle der ersten Funktionskomponente;
- Figur 1 A:: ein Detail der in der Figur 1 dargestellten Lenkradbaugruppe; und
- Figur 2:: eine schematische Ansicht einer Abwandlung der in der Figur 1 gezeigten Lenkradbaugruppe, bei der im Unterschied zur Figur 1 die zweite Funktionskomponente über eine Adaptereinheit mit dem Betätigungselement verbunden ist.

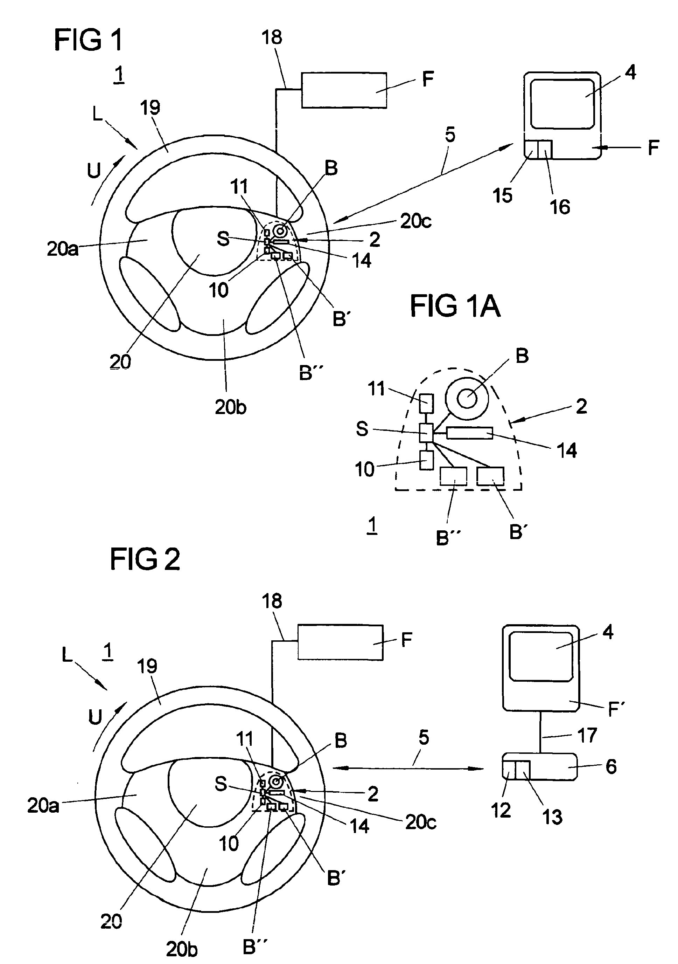

Figur 1 zeigt im Zusammenhang mit Figur 1A eine schematische Darstellung einer in einem Kraftfahrzeug anzuordnenden Lenkradbaugruppe 1, mit einem Lenkrad L, einer kompakten Betätigungseinheit 2, umfassend in das Lenkrad L integrierte Betätigungselementen B, B', B", sowie einer im Lenkrad angeordneten, mit den Betätigungselementen B, B', B" verbundenen Steuerelektronik S zum Ansteuern der Betätigungselemente B, B', B", wobei die Betätigungselemente B, B', B" einerseits zum Bedienen einer fest in das Kraftfahrzeug eingebauten ersten Funktionskomponente F eingerichtet und vorgesehen sind und andererseits zumindest teilweise einer zweiten, mobilen Funktionskomponente F' zugeordnet werden können, so dass die zweite Funktionskomponente F' an Stelle der ersten Funktionskomponente F mit den ihr zugeordneten Betätigungselementen B, B', B" betätigbar ist. Zu diesem Zweck ist die zweite, tragbare Funktionskomponente F' über eine zum kabellosen Übertragen von Informationen ausgebildete Signalübertragungsverbindung 5 mit der Steuereinheit S verbunden.

Das Lenkrad L weist einen entlang einer Umfangsrichtung U umlaufenden Lenkradkranz 19 auf, der über drei Speichen 20a, 20b, 20c mit einem Nabenkörper 20 des Lenkrades L verbunden ist, über den das Lenkrad L um eine quer zur Umfangsrichtung U des Lenkradkranzes 19 orientierte Drehachse drehbar an einem Kraftfahrzeug zu lagern ist. In Geradeausfahrtstellung des Lenkrades L - bezogen auf einen Einbauzustand des Lenkrades L - verlaufen zwei Speichen 20a, 20c des Lenkrades L entlang der horizontalen Fahrzeugquerachse vom Nabenkörper 20 ausgehend in entgegen gesetzten Richtungen zum Lenkradkranz 19 und münden in diesen ein. Eine dritte Speiche 20b verbindet in der Geradeausfahrtstellung des Lenkrades L den Nabenkörper 20 entlang der vertikalen Fahrzeugachse mit dem Lenkradkranz 19.

Die Betätigungselemente B, B', B" sind in eine als erste Speiche bezeichnete Speiche 20c eingelassen, die von einem das Lenkrad L bedienenden Fahrer aus gesehen auf der rechten Seite des Lenkrades L angeordnet ist, bezogen auf die Geradeausfahrtstellung des Lenkrades L. Aufgrund dieser Anordnung lassen sich die Betätigungselemente B, B', B" auch dann leicht mit dem Daumen erreichen, wenn beide Hände während der Fahrt den Lenkradkranz 19 umgreifen.

Ein erstes der Betätigungselemente ist als ein Drehauswahlschalter B ausgebildet, der in oder entgegen der Umfangsrichtung U drehbar an der ersten Speiche 20c gelagert ist und somit durch (manuelles) Drehen entlang der Umfangsrichtung U in eine Mehrzahl unterschiedlicher Einstellungen verstellbar ist.

Alternativ hierzu kann das erste Betätigungselement B als ein Joystick ausgebildet sein, der in eine Mehrzahl von unterschiedlichen, jeweils quer zur Drehachse verlaufenden Richtung kippbar ist und somit in eine Mehrzahl von Einstellungen (Kippzustände entlang unterschiedlicher Richtungen) einstellbar ist.

Des Weiteren sind zwei als Tasten ausgebildete zweite Betätigungselemente B', B" vorgesehen, die vorzugsweise - bezogen auf die Geradeausfahrtstellung des Lenkrades - entlang einer vertikalen Richtung unterhalb des ersten Betätigungselementes B angeordnet sind und die durch Drücken in eine auf das Lenkrad L weisende Richtung aus einer Ruheposition in eine Betätigungsposition überführbar sind. Die Taster können dabei dazu eingerichtet sein in der Betätigungsposition einzurasten, wobei sie durch nochmaliges Betätigen in ihre jeweilige Ruheposition zurückkehren. Alternativ hierzu werden die Taster bei nachlassendem Druck sofort in die Ruheposition zurückgestellt. Im Ergebnis sind die Taster somit in zwei unterschiedliche Einstellungen einstellbar.

Mittels eines unterhalb des ersten Betätigungsmittels B angeordneten Anzeigeelementes 14 wird beim Betätigen eines der Betätigungselemente B, B', B" die durch das Betätigen geregelte Funktion einer Funktionskomponente F, F' bzw. ein der Funktion zugeordneter Parameter (z.B. Lautstärke) sowie der momentane (verstellte) Wert des Parameters angezeigt. Alternativ hierzu kann eine Anzeige eines Betriebszustandes der mobilen zweiten Funktionskomponente F' auch über ein Anzeigelement 4 der fest installierten ersten Komponente erfolgen.

Die Betätigungselemente B, B', B" dienen u. a. zum Betätigen der ersten, fest im Kraftfahrzeug zu installierenden Funktionskomponente F, bei der es sich beispielsweise um ein Autoradio handeln kann und sind zu diesem Zweck über die Steuerelektronik S mit der ersten Funktionskomponente F gekoppelt. Die Steuerelektronik S ist dabei dazu ausgebildet, den unterschiedlichen Einstellungen der jeweiligen Betätigungselemente B, B, B" jeweils ein durch die Steuerelektronik S erzeugtes Ausgangssignal eindeutig zuzuordnen und dieses zum Einwirken auf die erste Funktionskomponente, d.h., zum Verstellen der ersten Funktionskomponente F (Aktivieren, Deaktivieren und Regeln), an die erste Funktionskomponente F zu übermitteln. Die Steuerelektronik S ist dabei vorzugsweise ebenfalls dazu ausgelegt, die Ausgangsignale in Abhängigkeit von einer Betätigungsdauer eines der Betätigungselemente B, B', B" einer Funktionskomponente F, F' zuzuordnen, also z.B. in Abhängigkeit von der Zeitdauer, während der sich eines der zweiten Betätigungselemente B', B" in der Betätigungsposition befindet. Dies eröffnet prinzipiell die Möglichkeit in einer Weiterbildung der Erfindung die Betätigungselemente B, B', B" beiden Funktionskomponenten F, F' gleichzeitig zuzuordnen, wobei z.B. die zweite Funktionskomponente F' nur dann angesprochen wird, wenn sich das entsprechende Betätigungselement B, B', B" während einer vorbestimmbaren Zeitdauer ununterbrochen in einer spezifischen Einstellung (Betätigungsposition) befindet.

Zum Übermitteln der Ausgangssignale an die erste Funktionskomponente F ist die Steuerelektronik S über eine Leitungsverbindung 18 mit der ersten Funktionskomponente F verbunden.

Wird nun eine tragbare zweite Funktionskomponente F, z.B. in Form eines mobilen, nicht fest installierten Navigationssystems in einen räumlichen Wirkbereich der Steuerelektronik S gebracht, z. B. in einen Innenraum eines Kraftfahrzeuges, in den die Lenkradbaugruppe 1 anzuordnen ist, so kann die Steuerelektronik S eine durch die zweite Funktionskomponente F automatisch oder auf Veranlassung einer Person (z.B. Fahrer) gesendete erste Kennung empfangen, mittels der der Steuerelektronik S angezeigt wird, dass sich die zweite Funktionskomponente F' in ihrem Wirkbereich befindet.

Zum Übertragen dieser ersten Kennung ist zwischen der Steuereinheit S und der zweiten Funktionskomponente eine zum kabellosen Austausch von Daten eingerichtete Signalübertragungsverbindung 5 vorgesehen, die jeweils auf Seiten der Steuereinheit S und auf Seiten der zweiten Funktionskomponente F' eine Sende- und eine Empfangseinheit 10, 11 bzw. 15, 16 aufweist.

Die Steuerelektronik S ist dazu ausgebildet, bei Empfang dieser ersten Kennung eine zweite Kennung über die Signalübertragungsverbindung 5 zurückzusenden, die Informationen über die Anzahl der zur Verfügung stehenden Betätigungselemente B, B', B" enthält, sowie die Anzahl der möglichen Einstellungen eines Betätigungselementes B, B', B".

Daraufhin wird an der zweiten Funktionskomponente F' durch den Benutzer (z.B. Fahrer) entschieden, welche der Betätigungselemente B, B', B" von der ersten Funktionskomponente F auf die zweite Funktionskomponente F' umgeschaltet werden sollen. Hierzu wird auf Veranlassung eines Benutzers (z.B. Fahrer) mittels der zweiten Funktionskomponente F' ein entsprechendes Antwortsignal über die Signalübertragungsverbindung an die Steuerelektronik S übertragen.

Die Steuerelektronik S ist nun dazu ausgebildet, bei Empfang eines positiven Antwortsignals die Ausgangsignale der zweiten Funktionskomponente F' derart zuzuordnen und an diese über die Signalübertragungsverbindung 5 zu übermitteln, dass die zweite Funktionskomponente F' mittels der ausgewählten Betätigungselemente B, B', B" bedienbar ist. Diese Umschaltung der Betätigungselemente B, B', B" wird bei einem Entfernen der zweiten Funktionskomponente F' aus der Wirkumgebung der Steuerelektronik S rückgängig gemacht. Des Weiteren wird eine Rücknahme der Umschaltung durch eine an der zweiten Funktionskomponente F' vorgenommene manuelle Eingabe erreicht. Aus Sicherheitsgründen ist die Steuerelektronik S dazu ausgelegt, eine Umschaltung der Betätigungselemente B, B', B" lediglich im Ruhezustand des Kraftfahrzeuges zuzulassen.

Figur 2 zeigt im Zusammenhang mit Figur 1A eine Abwandlung der in der Figur 1 gezeigten Lenkradbaugruppe 1, bei der im Unterschied zur Figur 1 die zweite Funktionskomponente F' nicht direkt über die Signalübertragungsverbindung 5 mit der Steuerelektronik S verbunden ist, sondern über eine Adaptereinheit 6, die ihrerseits über eine Sendeeinheit 12 und eine Empfangseinheit 13 verfügt, um zusammen mit der der Steuereinheit S zugeordneten Sendeinheit 10 bzw. Empfangseinheit 11 eine zum leitungslosen Austausch von Daten eingerichtete Signalübertragsverbindung 5 zu bilden. Zum Verbindung der Adaptereinheit 6 mit der zweiten, tragbaren Funktionseinheit F' ist eine Leitungsverbindung 17 vorgesehen.

Die Verwendung der Adaptereinheit 6 hat den Vorteil, dass auch portable zweite Funktionskomponenten F' in die Lenkradbaugruppe 1 eingebettet werden können, die per se nicht dazu eingerichtet sind, eigenständig über die Signalübertragungsverbindung 5 mit der Steuerelektronik S zu kommunizieren. Die Anpassung bzw. Umwandlung der zwischen der zweiten Funktionskomponente F' und der Steuerelektronik S ausgetauschten Signale wird bei einer derartigen zweiten Funktionskomponente F' von der Adaptereinheit 6 übernommen.

Die Anwesenheit der zweiten Funktionskomponente F' ist über die Adaptereinheit 6 detektierbar. Diese sendet dabei für den Fall, dass eine zweite Funktionskomponente F' an die Adaptereinheit 6 über die Leitungsverbindung 17 angeschlossen wird, die erste Kennung an die Steuerelektronik S und erhält daraufhin über die Signalübertragungsverbindung 5 die zweite Kennung der Steuerelektronik S. Diese wird durch die Adaptereinheit 6 an die zweite Funktionskomponente F' angepasst, so dass dort die jeweiligen Betätigungselemente B, B', B" und die Zahl der möglichen Einstellungen dieser Betätigungselemente bekannt sind.

An der zweiten Funktionskomponente F' kann der Benutzer nun bestimmte Betätigungselemente B, B', B" zum Betätigen der zweiten Funktionskomponente F' auswählen und die Umschaltung der ausgewählten Betätigungselemente von der ersten Funktionskomponente auf die zweite Funktionskomponente F' freigegeben. Das entsprechende Antwortsignal wird durch die zweite Funktionskomponente F' an die Adaptereinheit 6 übergeben und von dieser an die Steuerelektronik S angepasst und an diese über die Signalübertragungsverbindung 5 übermittelt.

Die Steuerelektronik S sendet daraufhin die entsprechenden, beim Betätigen der ausgewählten Betätigungselemente erzeugten Ausgangsignale über die Adaptereinheit 6 an die zweite Funktionskomponente F', wobei die Adaptereinheit 6 eine geeignete Anpassung der Ausgangssignale an die zweite Funktionskomponente F' vornimmt, so dass die zweite Funktionskomponente F' mittels der ausgewählten Betätigungselemente B, B', B" bedienbar ist.

## Patentansprüche

1. Lenkradbaugruppe für ein Kraftfahrzeug, mit:
- einem Lenkrad, und
- zumindest einem am Lenkrad angeordneten Betätigungselement, das zum Betätigen zumindest einer im Kraftfahrzeug installierten ersten Funktionskomponente des Kraftfahrzeuges eingerichtet und vorgesehen ist, und
- eine mit dem Betätigungselement zusammenwirkende Steuerelektronik zum Steuern des Betätigungselementes,
**dadurch gekennzeichnet, dass**
die Steuerelektronik (S) dazu ausgebildet ist, das Betätigungselement (B) mindestens einer portablen zweiten Funktionskomponente (F') zuzuordnen, die in einer Wirkumgebung der Steuerelektronik (S) lokalisiert wird, so dass die portable zweite Funktionskomponente (F') mittels des Betätigungselementes (B) betätigbar ist.

2. Lenkradbaugruppe nach Anspruch 1, **dadurch gekennzeichnet, dass** die Steuerelektronik (S) dazu ausgebildet ist, das Betätigungselement (B) derart der mindestens einen portablen zweiten Funktionskomponente (F') zuzuordnen, dass die portable zweite Funktionskomponente (F') an Stelle der ersten Funktionskomponente (F) mittels des Betätigungselementes (B) betätigbar ist.

3. Lenkradbaugruppe nach einem der Ansprüche 1 bis 2, **dadurch gekennzeichnet, dass** die Steuerelektronik (S) dazu ausgebildet ist, über eine zum leitungslosen Austausch von Daten ausgebildete Signalübertragungsverbindung (5) Daten mit der portablen zweiten Funktionskomponente (F') auszutauschen, um das Betätigungselement (B) der zweiten Funktionskomponente (F') zuzuordnen.

4. Lenkradbaugruppe nach Anspruch 3, **dadurch gekennzeichnet, dass** die Steuerelektronik (S) zum leitungslosen Senden von Daten zur zweiten Funktionskomponente (F') eine Sendeeinheit (10) als ein Bestandteil der Signalübertragungsverbindung (5) aufweist.

5. Lenkradbaugruppe nach einem der Ansprüche 3 oder 4, **dadurch gekennzeichnet, dass** die die Steuerelektronik (S) zum leitungslosen Empfangen von Daten einer portablen zweiten Funktionskomponente (F') eine Empfangseinheit (11) als Bestandteil der Signalübertragungsverbindung (5) aufweist.

6. Lenkradbaugruppe nach einem der vorhergehenden Ansprüche, **dadurch gekennzeichnet, dass** das Betätigungselement (B) eine Mehrzahl von Einstellungen aufweist, denen jeweils ein Ausgangssignal der Steuerelektronik (S) zum Einwirken auf eine Funktionskomponente (F, F') zugeordnet ist.

7. Lenkradbaugruppe nach Anspruch 3 oder einem der Ansprüche 4 bis 6 soweit rückbezogen auf Anspruch 3, **dadurch gekennzeichnet, dass** die Steuerelektronik (S) dazu ausgebildet ist, auf eine durch die zweite Funktionskomponente (F') über die Signalübertragungsverbindung (5) zur Steuerelektronik (S) gesendete erste Kennung hin eine zweite Kennung über die Signalübertragungsverbindung (5) an die zweite Funktionskomponente (F') zu übermitteln, in der zumindest die Anzahl der zur Bedienung der zweiten Funktionskomponente (F') zur Verfügung stehenden Betätigungselemente (B, B', B") kodiert ist.

8. Lenkradbaugruppe nach einem der vorhergehenden Ansprüche, **dadurch gekennzeichnet, dass** das Betätigungselement (B, B', B") ein Anzeigeelement (14) zum Anzeigen von Informationen aufweist.

9. Lenkradbaugruppe nach Anspruch 8, **dadurch gekennzeichnet, dass** die Steuerelektronik (S) dazu eingerichtet ist, einen mittels des Betätigungselementes (B) veränderbaren Betriebszustand der ersten oder zweiten Funktionskomponente (F, F') über das Anzeigeelement (14) anzuzeigen.

10. Lenkradbaugruppe nach einem der vorhergehenden Ansprüche, **gekennzeichnet durch** eine zweite Funktionskomponente (F'), die insbesondere als eine der folgenden Funktionskomponenten ausgebildet ist:
- ein portables Navigationsgerät, insbesondere satellitengesteuert, zum Anzeigen einer Fahrtroute,
- ein portabler PDA,
- ein Mobiltelefon,
- ein portables Audiogerät, insbesondere MP3-Player, oder
- ein portabler PC (Notebook).

11. Lenkradbaugruppe nach einem der vorangegangenen Ansprüche, **dadurch gekennzeichnet, dass** eine Mehrzahl von Betätigungselementen (B) am Lenkrad (L) angeordnet sind, die zum Betätigen zumindest einer ersten, im Kraftfahrzeug installierten Funktionskomponenten (F) eingerichtet und vorgesehen sind, wobei insbesondere die Steuerelektronik (S) dazu ausgebildet ist, eine Gruppe aus der Gesamtheit der Betätigungselemente (B) einer portablen zweiten Funktionskomponente (F') zuzuordnen, die in einer Wirkumgebung der Steuerelektronik (S) lokalisiert ist, so dass die portable zweite Funktionskomponente (F') an Stelle zumindest einer ersten Funktionskomponente (F) mittels der Gruppe der Betätigungselemente (B) betätigbar ist.

12. Verfahren zum Bedienen einer portablen Funktionskomponente mit einer Lenkradbaugruppe für ein Kraftfahrzeug nach einem der vorangegangenen Ansprüche, mit den Schritten:
- Bereitstellen einer Lenkradbaugruppe, mit zumindest einem am Lenkrad angeordneten Betätigungselement (B, B', B") zum Betätigen zumindest einer im Kraftfahrzeug installierten ersten Funktionskomponente (F) des Kraftfahrzeuges, und mit einer mit dem Betätigungselement (B, B', B") zusammenwirkenden Steuerelektronik (S) zum Steuern des Betätigungselementes (B, B', B"),
- Empfangen einer kabellos übertragenen ersten Kennung einer portablen zweiten Funktionskomponente (F') durch die Steuerelektronik (S),
- daraufhin kabelloses Übertragen einer zweiten Kennung zur zweiten Funktionskomponente (F') durch die Steuerelektronik (S), wobei in der zweiten Kennung zumindest die Anzahl der am Lenkrad (L) zur Bedienung der zweiten Funktionskomponente (F') zur Verfügung stehenden Betätigungselemente (B, B', B") kodiert ist,
- Auswahl zumindest eines Betätigungselementes (B, B', B") aus der Anzahl der zur Verfügung stehenden Betätigungselemente (B, B', B") des Lenkrades (L) mittels der portablen zweiten Funktionskomponente (F').

13. Verfahren nach Anspruch 12, **dadurch gekennzeichnet, dass** mittels der zweiten Funktionskomponente (F') ein dafür vorgesehenes Antwortsignal auf die Steuerelektronik (S) übertragen wird, um das zumindest eine Betätigungselement (B) der zweiten Funktionskomponente (F') zuzuordnen, so dass die zweite Funktionskomponente (F') an Stelle der ersten Funktionskomponente (F) mit dem mindestens einen Betätigungselement (B) bedienbar ist.

14. Verfahren nach einem der Ansprüche 12 oder 13, **dadurch gekennzeichnet, dass** mittels der Steuerelektronik (S) unterschiedlichen Einstellungen des Betätigungselementes (B) jeweils ein Ausgangssignal zum Einwirken auf die erste oder zweite Funktionskomponente (F,F') eindeutig zugeordnet wird.

15. Verfahren nach Anspruch 14, **dadurch gekennzeichnet, dass** die Ausgangssignale kabellos zur zweiten Funktionskomponente (F') übertragen werden, so dass die zweite Funktionskomponente (F') mittels des mindestens einen Betätigungselementes (B, B', B") betätigbar ist, wobei insbesondere die Ausgangssignale lediglich dann an die zweite Funktionskomponente (F') übertragen werden, wenn die Übertragung durch Eingabe eines Freischaltcodes mittels des mindestens einen Betätigungselementes (B, B', B") frei geschaltet wurde.

## Claims

1. A steering wheel assembly for a motor vehicle having:
- a steering wheel, and
- at least one actuating element which is arranged on the steering wheel and which is configured and provided for actuating at least a first functional component of the motor vehicle, which is installed in the motor vehicle, and
- an electronic control unit which interacts with the actuating element and has the purpose of controlling the actuating element,
**characterized in that**
the electronic control unit (S) is designed to assign the actuating element (B) to at least one portable second functional component (F'), which is positioned in the effective surroundings of the electronic control unit (S), with the result that the portable second functional component (F') can be actuated by means of the actuating element (B).

2. The steering wheel assembly as claimed in claim 1, **characterized in that** the electronic control unit (S) is designed to assign the actuating element (B) to the at least one portable second functional component (F') in such a way that the portable second functional component (F') can be actuated instead of the first functional component (F) by means of the actuating element (B).

3. The steering wheel assembly as claimed in one of claims 1 to 2, **characterized in that** the electronic control unit (S) is designed to exchange data with the portable second functional component (F') via a signal transmitting link (5), embodied for wireless exchange of data, in order to assign the actuating element (B) to the second functional component (F').

4. The steering wheel assembly as claimed in claim 3, **characterized in that** the electronic control unit (S) has, for the wireless transmission of data to the second functional component (F'), a transmitting unit (10) as a component of the signal transmitting link (5).

5. The steering wheel assembly as claimed in one of claims 3 or 4, **characterized in that** the electronic control unit (S) has, for the wireless reception of data from a portable second functional component (F'), a receiving unit (11) as a component of the signal transmitting link (5).

6. The steering wheel assembly as claimed in one of the preceding claims, **characterized in that** the actuating element (B) has a plurality of settings which are each assigned an output signal of the electronic control unit (S) for acting on a functional component (F, F').

7. The steering wheel assembly as claimed in claim 3 or one of claims 4 to 6 insofar as referred back to claim 3, **characterized in that** the electronic control unit (S) is designed to transmit, in response to a first identifier transmitted by the second functional component (F') to the electronic control unit (S) via the signal transmitting link (5), a second identifier via the signal transmitting link (5) to the second functional component (F') in which at least the number of actuating elements (B, B', B") which are available for operating the second functional component (F') is encoded.

8. The steering wheel assembly as claimed in one of the preceding claims, **characterized in that** the actuating element (B, B', B") has a display element (14) for displaying information.

9. The steering wheel assembly as claimed in claim 8, **characterized in that** the electronic control unit (S) is configured to display an operating state, which can be varied by means of the actuating element (B), of the first or second functional component (F, F') using the display element (14).

10. The steering wheel assembly as claimed in one of the preceding claims, **characterized by** a second functional component (F') which is designed, in particular as one of the following functional components:
- a portable navigation device, in particular satellite controlled, for displaying a route,
- a portable PDA,
- a mobile phone,
- a portable audio device, in particular MP3 player, or
- a portable PC (Notebook).

11. The steering wheel assembly as claimed in one of the preceding claims, **characterized in that** a plurality of actuating elements (B) are arranged on the steering wheel (L), which actuating elements (B) are configured and provided for actuating at least a first functional component (F) which is installed in the motor vehicle,wherein in particular the electronic control unit (S) is configured to assign a group from the totality of the actuating elements (B) to a portable second functional component (F') which is located in the effective surroundings of the electronic control unit (S), with the result that the portable second functional component (F') can be actuated instead of at least a first functional component (F) by means of the group of actuating elements (B).

12. A method for operating a portable functional component having a steering wheel assembly for a motor vehicle as claimed in one of the preceding claims, having the steps:
- provision of a steering wheel assembly, having at least one actuating element (B, B', B") which is arranged on the steering wheel and has the purpose of actuating at least one first functional component (F) of the motor vehicle, which is installed in the motor vehicle and having an electronic control unit (S) which interacts with the actuating element (B, B', B") and has the purpose of controlling the actuating element (B, B', B"),
- reception of a first identifier, transmitted in a wireless fashion, of a portable second functional component (F') by the electronic control unit (S),
- subsequent wireless transmission of a second identifier to the second functional component (F') by the electronic control unit (S), wherein at least the number of actuating elements (B, B', B") which are available at the steering wheel (L) for operating the second functional component (F') is encoded in the second identifier,
- selection of at least one actuating element (B, B', B") from the number of available actuating elements (B, B', B") of the steering wheel (L) by means of the portable second functional component (F').

13. The method as claimed in claim 12, **characterized in that** by means of the second functional component (F'), a response signal, provided for this purpose, is transmitted to the electronic control unit (S), in order to assign at least one actuating element (B) to the second functional component (F'), with the result that the second functional component (F') can be operated with the at least one actuating element (B) instead of the first functional component (F).

14. The method as claimed in one of claims 12 or 13, **characterized in that**, by means of the electronic control unit (S), different settings of the actuating element (B) can each be assigned an output signal in a uniquely defined way for acting on the first or second functional component (F, F').

15. The method as claimed in claim 14, **characterized in that** the output signals are transmitted in wireless fashion to the second functional component (F'), with the result that the second functional component (F') can be actuated by means of the at least one actuating element (B, B', B"), wherein in particular the output signals are transmitted to the second functional component (F') only if the transmission has been enabled by inputting an enabling code by means of the at least one actuating element (B, B', B").

## Revendications

1. Sous-groupe de volant de direction pour un véhicule automobile, comprenant :
- un volant de direction et
- au moins un élément d'actionnement disposé sur le volant de direction, qui est agencé et prévu pour actionner au moins un premier compos ant fonctionnel du véhicule automobile installé dans le véhicule automobile, et
- une électronique de commande coopérant avec l'élément d'actionnement pour commander l'élément d'actionnement,
**caractérisé en ce que**
l'électronique de commande (S) est réalisée pour affecter l'élément d'actionnement (B) à au moins un deuxième composant fonctionnel portable (F') qui est localisé dans un environnement opérationnel de l'électronique de commande (S), de sorte que le deuxième composant fonctionnel portable (F') peut être actionné au moyen de l'élément d'actionnement (B).

2. Sous-groupe de volant de direction selon la revendication 1, **caractérisé en ce que** l'électronique de commande (S) est réalisée pour affecter l'élément d'actionnement (B) à l'au moins un deuxième composant fonctionnel portable (F') de telle sorte que le deuxième composant fonctionnel portable (F') peut être actionné à la place du premier composant fonctionnel (F) au moyen de l'élément d'actionnement (B).

3. Sous-groupe de volant de direction selon l'une des revendications 1 à 2, **caractérisé en ce que** l'électronique de commande (S) est formée pour, par l'intermédiaire d'une liaison de transmission de signaux (5) formée pour un échange de données sans fil, échanger des données avec le deuxième composant fonctionnel portable (F'), afin d'affecter l'élément d'actionnement (B) au deuxième composant fonctionnel (F').

4. Sous-groupe de volant de direction selon la revendication 3, **caractérisé en ce que** l'électronique de commande (S) comprend une unité d'émission (10) comme composant de la liaison de transmission de signaux (5) pour l'émission sans fil de données vers le deuxième composant fonctionnel (F').

5. Sous-groupe de volant de direction selon l'une des revendications 3 ou 4, **caractérisé en ce que** l'électronique de commande (S) comprend une unité de réception (11) comme composant de la liaison de transmission de signaux (5) pour la réception sans fil de données d'un deuxième composant fonctionnel portable (F').

6. Sous-groupe de volant de direction selon l'une des revendications précédentes, **caractérisé en ce que** l'élément d'actionnement (B) comprend une pluralité de réglages auxquels est respectivement affecté un signal de sortie de l'électronique de commande (S) pour influer sur un composant fonctionnel (F, F').

7. Sous-groupe de volant de direction selon la revendication 3 ou l'une des revendications 4 à 6, dans la mesure où elles dépendent de la revendication 3, **caractérisé en ce que** l'électronique de commande (S) est formée pour, après envoi à l'électronique de commande (S) d'une première identification par le deuxième composant fonctionnel (F') par l'intermédiaire de la liaison de transmission de signaux (5), transmettre au deuxième composant fonctionnel (F') une deuxième identification par l'intermédiaire de la liaison de transmission de signaux (5), avec codage d'au moins le nombre d'éléments d'actionnement (B, B', B") disponibles pour commander le deuxième composant fonctionnel (F').

8. Sous-groupe de volant de direction selon l'une des revendications précédentes, **caractérisé en ce que** l'élément d'actionnement (B, B', B") comprend un élément d'affichage (14) pour afficher des informations.

9. Sous-groupe de volant de direction selon la revendication 8, **caractérisé en ce que** l'électronique de commande (S) est agencée pour afficher, par l'intermédiaire de l'élément d'affichage (14), un état de fonctionnement du premier ou du deuxième composant fonctionnel (F, F') modifié au moyen de l'élément d'actionnement (B).

10. Sous-groupe de volant de direction selon l'une des revendications précédentes, **caractérisé par** un deuxième composant fonctionnel (F'), qui est en particulier formé comme l'un des composants fonctionnels suivants :
- un dispositif de navigation portable, en particulier commandé par satellite, pour afficher un itinéraire,
- un PDA portable,
- un téléphone portable,
- un appareil audio portable, en particulier lecteur MP3, ou
- un PC portable (Notebook).

11. Sous-groupe de volant de direction selon l'une des revendications précédentes, **caractérisé en ce qu'**une pluralité d'éléments d'actionnement (B) sont disposés sur le volant de direction (L), lesquels sont agencés et prévus pour actionner au moins un premier composant fonctionnel (F) installé dans le véhicule automobile, l'électronique de commande (S) étant en particulier formée pour affecter un groupe de la totalité des éléments d'actionnement (B) à un deuxième composant fonctionnel portable (F') qui est localisé dans un environnement opérationnel de l'électronique de commande (S), de sorte que le deuxième composant fonctionnel portable (F') puisse être actionné à la place d'au moins un premier composant fonctionnel (F) au moyen du groupe d'éléments d'actionnement (B).

12. Procédé de commande d'un composant fonctionnel portable avec un sous-ensemble de volant de direction pour un véhicule automobile selon l'une des revendications précédentes, comprenant les étapes suivantes :
- fourniture d'un sous-ensemble de volant de direction comprenant au moins un élément d'actionnement (B, B', B") disposé sur le volant de direction pour actionner au moins un premier composant fonctionnel (F) du véhicule automobile installé dans le véhicule automobile, et une électronique de commande (S) coopérant avec l'élément d'actionnement (B, B', B") pour commander l'élément d'actionnement (B, B', B"),
- réception par l'électronique de commande (S) d'une première identification transmise sans fil d'un deuxième composant fonctionnel portable (F'),
- ensuite, transmission sans fil d'une deuxième identification vers le deuxième composant fonctionnel (F') par l'électronique de commande (S), avec codage, dans la deuxième identification, d'au moins le nombre d'éléments d'actionnement (B, B', B") disponibles sur le volant de direction (L) pour commander le deuxième composant fonctionnel portable (F'),
- sélection d'au moins un élément d'actionnement (B, B', B") parmi le nombre d'éléments d'actionnement (B, B', B") du volant de direction (L) disponibles au moyen du deuxième composant fonctionnel portable (F').

13. Procédé selon la revendication 12, **caractérisé en ce qu'**un signal de réponse prévu à cet effet est transmis à l'électronique de commande (S) au moyen du deuxième composant fonctionnel (F') afin d'affecter l'au moins un élément d'actionnement (B) au deuxième composant fonctionnel (F'), de sorte que le deuxième composant fonctionnel (F') peut être actionné à la place du premier composant fonctionnel (F) avec l'au moins un élément d'actionnement (B).

14. Procédé selon l'une des revendications 12 ou 13, **caractérisé en ce qu'**un signal de sortie est respectivement affecté clairement à différents réglages de l'élément d'actionnement (B) au moyen de l'électronique de commande (S) pour agir sur le premier ou le deuxième composant fonctionnel (F, F').

15. Procédé selon la revendication 14, **caractérisé en ce que** les signaux de sortie sont transmis sans fil au deuxième composant fonctionnel (F'), de sorte que le deuxième composant fonctionnel (F') peut être actionné au moyen de l'au moins un élément d'actionnement (B, B', B"), les signaux de sortie étant en particulier transmis au deuxième composant fonctionnel (F') uniquement lorsque la transmission a été activée par l'entrée d'un code d'activation au moyen de l'au moins un élément d'actionnement (B, B', B").
